# DEMANDE DE BREVET EUROPEEN

(11) **EP 4 162 805 A1**
(43) Date de publication de la demande: **12.04.2023**
(21) Numéro de dépôt: 22204257.4
(22) Date de dépôt: 10.01.2020
(51) Int. Cl.: A23J 3/04

(54) **PROCÉDÉ DE PRÉPARATION DE NUTRIMENTS À PARTIR D'INSECTES**

(30) Priorité: 11.01.2019 FR 1900268
(62) Demande divisionnaire de: 20707709.0
(71) Demandeur: Nextprotein, 75008 Paris (FR)
(72) Inventeur: GASTLI, Mohamed, PARIS (FR); COQUELLE, Mathilde, WIMEREUX (FR); DELANNOY, Charles, WIMEREUX (FR); BOUQUET, Peggy, LE RHEU (FR)
(74) Mandataire: Cabinet Beau de Loménie

(57) **Abrégé**

L'invention concerne un procédé de préparation de nutriments à partir d'insectes comprenant les étapes suivantes : a) broyer des insectes afin d'obtenir un broyat ; b) soumettre le broyat à une hydrolyse enzymatique afin d'obtenir un broyat hydrolysé ; c) presser le broyat hydrolysé afin d'obtenir une fraction solide enrichie en chitine et une fraction liquide, et d) soumettre la fraction liquide à une séparation physique afin d'obtenir une fraction protéique aqueuse et une fraction huileuse.

## Description

### Domaine Technique

L'invention concerne un procédé de préparation de nutriments à partir d'insectes. Les nutriments préparés peuvent notamment être utilisés dans l'industrie, en particulier dans l'industrie agro-alimentaire et dans l'alimentation animale.

### Technique antérieure

Les insectes constituent un apport nutritionnel riche en nutriments essentiels et représentent ainsi une source alimentaire d'intérêt. L'union européenne les a d'ailleurs intégrés dans son règlement 2015/2283 comme nouvel aliment, et considère qu'ils sont une denrée alimentaire d'avenir. Cette alimentation alternative est intéressante face aux enjeux agricoles et écologiques auxquels devront faire face les populations et à la pénurie des terres. D'ailleurs, les nutriments obtenus à partir d'insectes étant riches en protéines et en matières grasses, leur utilisation permettrait de substituer l'alimentation à base de poissons ou de soja dans l'alimentation animale.

Ainsi, il est devenu essentiel de développer des procédés qui permettent de préparer des nutriments à partir d'insectes, notamment à l'échelle industrielle. Le document WO 2016/108034 décrit un procédé de préparation de chitine et / ou de chitosan à partir d'insectes par traitement des cuticules d'insectes avec un agent oxydant et par hydrolyse enzymatique des cuticules d'insectes avec une enzyme protéolytique. Cependant, ce procédé nécessite l'ajout d'un additif dans le procédé et ne permet pas de fractionner convenablement les insectes notamment pour obtenir une fraction enrichie en protéines.

La demande WO 2013/191548 décrit un procédé pour convertir des insectes ou des vers en flux nutritifs afin d'obtenir trois fractions différentes par hydrolyse enzymatique puis séparation. Cependant, il subsiste une importante perte de matières entrainant une baisse de rendement final, notamment de la fraction protéique. Par ailleurs, la pureté des fractions obtenue n'est pas optimale.

La demande FR 3 031 113 décrit un procédé de production de produit(s) d'intérêt à partir d'insectes comportant une étape préalable de pressage des cuticules d'insectes pour séparer le jus de presse (contenant notamment la fraction huileuse et la fraction protéique) et le gâteau de presse (contenant notamment la chitine), puis une étape d'hydrolyse enzymatique du gâteau de presse. Ce procédé, qui vise essentiellement à extraire la chitine et/ou le chitosan, n'est pas optimisé pour obtenir des fractions protéiques et huileuses suffisamment pures et avec un rendement satisfaisant.

Il existe donc un besoin de mettre au point un procédé de préparation de nutriments à partir d'insectes avec un meilleur rendement, notamment de la fraction protéique. De plus, il subsiste un besoin d'obtenir des fractions de nutriments plus pures, notamment une fraction protéique qui soit plus pure, à savoir plus enrichie en protéines et comprenant peu de matières grasses.

C'est dans ce contexte que le demandeur a mis au point, et ceci constitue le fondement de la présente invention, un procédé de préparation de nutriments à partir d'insectes comprenant les étapes décrites ci-après.

### Résumé de l'invention

La présente invention, qui trouve application dans le domaine de l'alimentation, vise à proposer un nouveau procédé de préparation de nutriments à partir d'insectes.

Selon un premier aspect, l'invention concerne un procédé de préparation de nutriments à partir d'insectes comprenant les étapes suivantes :
a) broyer des insectes afin d'obtenir un broyât,
b) soumettre le broyat à une hydrolyse enzymatique afin d'obtenir un broyat hydrolysé,
c) presser le broyat hydrolysé afin d'obtenir une fraction solide enrichie en chitine et une fraction liquide, et
d) soumettre la fraction liquide à une séparation physique afin d'obtenir une fraction protéique aqueuse et une fraction huileuse.

Selon un deuxième aspect, l'invention concerne une fraction protéique aqueuse susceptible d'être obtenue par la mise en œuvre du procédé selon l'invention, dans laquelle au moins 20% en masse des protéines et fragments de protéines contenus dans ladite fraction ont un poids moléculaire compris entre 1300 Da et 5700 Da.

Selon un troisième aspect, l'invention concerne une fraction huileuse susceptible d'être obtenue par la mise en œuvre du procédé selon l'invention.

Selon un quatrième aspect, l'invention concerne une fraction solide enrichie en chitine susceptible d'être obtenue par la mise en œuvre du procédé selon l'invention, dans laquelle la teneur en chitine est au moins égale à 15% en masse de la masse sèche de ladite fraction.

### Description détaillée

Le terme «nutriments» désigne des composés organiques et / ou inorganiques nécessaires à un organisme vivant pour assurer son bon fonctionnement. Dans le cadre de la présente invention, les fractions obtenues par la mise en œuvre du procédé selon l'invention sont considérées comme des « nutriments » ou des « fractions de nutriments ».

Le terme « insectes » désigne des insectes à n'importe quel stade de leur développement, tel que le stade adulte, le stade de larves et / ou le stade de nymphe. Dans le cadre de la présente invention, les insectes sont de préférence au stade de larves. Plus particulièrement, les insectes peuvent être choisis parmi les coléoptères, diptères, lépidoptères, orthoptères, isoptères, hyménoptères, blattoptères, hémyptères, hétéroptères, éphéméroptère et les mécoptères, de préférence parmi les diptères. Préférentiellement, les insectes sont choisis parmi *Tenebrio molitor, Hermetia illucens, Galleria mellonella, Alphitobius diaperinus, Zophobas morio, Blattera fusca, Tribolium castaneum, Rhynchophorus ferrugineus, Musca domestica, Chrysomya megacephala, Locusta migratoria, Schistocerca gregaria, Acheta domesticus, Gryllodes sigillatus, Gryllus assimillis* et *Samia ricini,* de préférence choisis parmi *Hermetia illucens, gryllodes sigillatus, Gryllus assimillis, Musca domestica, Tenebrio molitor, Alphitobius diaperinus* et *Acheta domesticus.* Les larves de *Hermetia illucens* sont particulièrement préférées dans le cadre de la présente invention.

La présente invention découle des avantages mis en évidence par les inventeurs de la mise en œuvre du procédé de préparation de nutriments à partir d'insectes décrit ci-après. Dans le cadre de la présente description, les termes « procédé de préparation de nutriments à partir d'insectes » et « procédé de préparation de fractions de nutriments à partir d'insectes » sont interchangeables.

L'invention concerne en effet un procédé de préparation de nutriments à partir d'insectes comprenant les étapes suivantes :
a) broyer des insectes afin d'obtenir un broyat,
b) soumettre le broyat à une hydrolyse enzymatique afin d'obtenir un broyat hydrolysé,
c) presser le broyat hydrolysé afin d'obtenir une fraction solide enrichie en chitine et une fraction liquide, et
d) soumettre la fraction liquide à une séparation physique afin d'obtenir une fraction protéique aqueuse et une fraction huileuse.

Le procédé selon l'invention permet notamment d'obtenir des fractions de nutriments plus pures et / ou avec un meilleur rendement, notamment une fraction protéique aqueuse plus pure, à savoir riche en protéines et pauvre en lipides.

### Etape a)

L'étape a) consiste à broyer les insectes afin d'obtenir un broyat. Le broyage permet d'obtenir un matériel de départ de consistance visqueuse. La viscosité du broyat peut varier en fonction de la nature et de la composition des insectes broyés. L'Homme du métier n'aura aucune difficulté à adapter la viscosité du broyat. Par exemple, la viscosité souhaitée peut être facilement obtenue en ajoutant plus ou moins d'eau avant, pendant ou après le broyage des insectes.

Le broyage peut être réalisé avec un outil de broyage adapté, par exemple un broyeur comprenant une turbine et une tête de coupe, un broyeur à bille ou encore un micro-broyeur. Le choix de l'outil de broyage peut influer sur la granulométrie des particules d'insectes présentes dans le broyat. De préférence, la granulométrie des particules d'insectes présentes dans le broyat obtenu à l'étape a) est inférieure à 2,0 mm, notamment inférieure à 1,0 ou encore inférieure à 0,5 mm. La granulométrie peut être mesurée par toute méthode appropriée, par exemple par tamisage. L'Homme du métier n'aura aucune difficulté à adapter l'étape de broyage pour obtenir la granulométrie souhaitée. En général, plus la granulométrie est faible, plus l'hydrolyse de l'étape b) est facilitée. Une faible granulométrie favorise l'attaque enzymatique et augmente ainsi la performance de l'hydrolyse enzymatique.

Dans un mode de réalisation particulier, l'étape a) est réalisée à une température allant de 20 à 90 °C, préférentiellement de 40 à 70 °C.

Le procédé selon l'invention est particulièrement avantageux car il peut être mis en œuvre à l'échelle industrielle. Ainsi, l'invention concerne donc un procédé industriel de préparation de nutriments à partir d'insectes. Dans un mode de réalisation particulier, l'étape a) consiste à broyer au moins 25 kg d'insectes, au moins 100 kg, au moins 200 kg, au moins 300 kg, au moins 500 kg, au moins 1000 kg, au moins 2500 kg, au moins 5000 kg, au moins 7500 kg, par exemple au moins 10 000 kg d'insectes. En particulier, l'étape a) consiste à broyer au moins 25 kg/h d'insectes, au moins 100 kg/h, au moins 200 kg/h, au moins 300 kg/h, au moins 500 kg/h, au moins 1000 kg/h, au moins 2500 kg/h, au moins 5000 kg/h, au moins 7500 kg/h, par exemple au moins 10 000 kg/h d'insectes.

### Etape b)

L'étape b) consiste à soumettre le broyat à une hydrolyse enzymatique afin d'obtenir un broyat hydrolysé. Cette étape permet notamment de solubiliser les protéines.

Certains procédés décrits dans l'art antérieur comprennent une étape qui consiste à retirer la fraction huileuse du broyat avant l'étape d'hydrolyse enzymatique (voir par exemple le procédé décrit dans FR 3 031 113). Dans le cadre de la présente invention, contrairement à ce qui est décrit dans l'art antérieur, le broyat obtenu à l'étape a) ne subit aucune étape de séparation avant l'étape d'hydrolyse enzymatique, telle qu'une étape de pressage. Les inventeurs ont ainsi montré qu'il n'était pas nécessaire de retirer la fraction huileuse du broyat avant l'hydrolyse enzymatique et que le rendement et la pureté des fractions protéique aqueuse et huileuse en étaient même améliorés.

Dans un mode de réalisation particulier, le procédé selon l'invention ne comprend pas l'ajout d'un agent oxydant avant l'étape d'hydrolyse enzymatique.

L'étape b) est réalisée par la mise en contact du broyat obtenu à l'étape a) avec une ou plusieurs enzymes de type protéase. La ou les protéase(s) peu(ven)t être une/des protéase(s) acide(s), basique(s) ou neutre(s), par exemple choisie(s) parmi les aminopeptidases, les métallocarboxypeptidases, les endopeptidases sérine, les endopeptidases cystéine, les endopeptidases aspartiques, les métalloendopeptidases, les exopeptidases ou un mélange de celles-ci.

Les enzymes suivantes, ou un mélange de plusieurs de ces enzymes, peuvent être utilisées à l'étape b) :
- Protéase de Bacillus : Protamex (EC 3.4.21.14, Novozyme),
- Casein protease : Promod 439L (Biocatalysts),
- Aminopeptidases : Flavourzyme (EC 3.4.11.1, Novozyme), Fungal protease 500 (EC 3.4.11.1, Bio-Cat), Kojizyme (EC 3.4.11.1, Novozyme),
- Endopeptidases sérine : Protex P (EC 3.4.21, Genencor International B.V.), Chymotrypsine (EC 3.4.21.1 Novozyme), Protamex (EC 3.4.21, Novozyme), Elastase (EC 3.4.21.14, Novozyme), Trypsine (EC 3.4.21.36, Novozyme), Alcalase (EC 3.4.21.4, Novozyme),
- Endopeptidases cystéine : Papaïne (EC 3.4.22, BSC Biochemicals), Bromelaine (ananase) (EC 3.4.22.32, Bio-Cat),
- Endopeptidases aspartique : Prolyve NP (EC 3.4.23, Lyven), Pepsine (EC 3.4.24.1, Sigma Aldrich),
- Métallo-endopeptidases : Neutral protéase (EC 3.4.24.28, Bio-Cat),
- Endopeptidases : Protex 50 FP (EC 3.4.21, Genencor International B.V. (Dupont)), Sumizyme BNP-L (Takabio-Shin Nihon),
- Exo et endopeptidase (cocktail protéases + amylases) : Pancrealyve (Lyven),
- Protéase aspartique : Izyme BA (EC 3.4.23, Novozyme),
- Aspergillopepsin I : Sumizyme AP-L (Takabio-Shin Nihon),
- Endoprotéase base de Zn de beta ayloliéquefaciens : Neutrase (EC 3.4.24, Novozyme), et
- Protéase : Novozyme 37071 (Novozyme).

La quantité d'enzyme(s) ajoutée(s) à l'étape b) peut être facilement ajustée en fonction de la ou des enzymes utilisées afin d'obtenir une activité enzymatique satisfaisante.

Le pH du broyat pourra être ajusté en fonction de la ou des enzymes utilisées. Pour les protéases acides le pH sera acide, généralement allant de pH 3 à pH 6. Pour les protéases alcalines, le pH sera basique, généralement allant de pH 8 à pH 10. Pour les protéases neutres, le pH sera neutre, généralement allant de pH 6 à pH 8.

La température lors de l'étape b) pourra être ajustée en fonction de l'enzyme ou des enzymes utilisée(s) et de la vitesse de réaction souhaitée. Dans un mode de réalisation particulier, l'étape b) est réalisée à une température allant de 40 à 70 °C, par exemple de 50 à 55 °C.

De préférence, l'étape b) est réalisée sous agitation, par exemple en plaçant le broyat dans une cuve qui comprend un dispositif permettant d'agiter le broyat. L'agitation peut être facilitée en ajoutant de l'eau au mélange, ce qui permet de diminuer la viscosité, et / ou en utilisant une pompe centrifuge. L'agitation permet d'homogénéiser le mélange et favorise l'hydrolyse enzymatique, ce qui permet notamment de diminuer le temps d'hydrolyse.

Dans un mode de réalisation particulier, la réaction d'hydrolyse est stoppée en chauffant le broyat hydrolysé, en particulier à une température allant de 70 à 100°C, par exemple en chauffant à 80°C. Le chauffage permet d'inactiver la protéase. Généralement, l'hydrolyse est stoppée au bout de 1 à 5 heures, par exemple au bout de 3 à 4 heures.

Dans un autre mode de réalisation particulier, le broyat hydrolysé n'est pas chauffé pour stopper la réaction d'hydrolyse avant l'étape c) de pressage. Le fait de ne pas chauffer le broyat hydrolysé permet de préserver le broyat hydrolysé d'une dégradation par la chaleur, notamment des lipides contenus dans le broyat. Ce mode de réalisation permet de préserver la qualité des fractions obtenues à l'étape d), notamment la fraction huileuse.

### Etape c)

L'étape c) consiste à presser le broyat hydrolysé afin d'obtenir une fraction solide enrichie en chitine et une fraction liquide. La fraction solide enrichie en chitine correspond à la fraction communément appelée « gâteau de presse » ou « boue » et la fraction liquide correspond à la fraction communément appelée « jus de presse » ou « filtrat ». Le pressage peut être réalisé avec un outil de pressage adapté, par exemple une presse à vis.

La température lors du pressage doit être suffisamment élevée pour que les lipides présents dans le broyat hydrolysé (fraction huileuse) soient à l'état liquide. La température lors du pressage est généralement supérieure à 25°C, par exemple comprise entre 25°C et 100°C, entre 40°C et 100°C, entre 60°C et 100°C, ou encore comprise entre 80 et 90°C. Le choix de la température peut dépendre de la nature des lipides présents dans le broyat hydrolysé.

Avantageusement, l'outil de pressage est équipé d'un tamis. Le tamis permet de retenir la fraction solide enrichie en chitine tout en laissant passer la fraction liquide. La taille des pores est de préférence inférieure à 3 mm, par exemple de 0,5 à 2 mm.

Lorsque le pressage est réalisé avec une presse à vis équipée d'un tamis, l'Homme du métier n'a aucune difficulté à choisir un tamis adapté et à régler la pression, par exemple en réglant la vitesse de la vis et la fermeture de l'obturateur. En général, la pression appliquée avec une presse à vis va de 1 à 5 bar(s). L'utilisation d'une presse à vis est particulièrement avantageuse puisqu'elle permet de séparer efficacement la fraction solide enrichie en chitine et la fraction liquide à une vitesse de rotation faible (moins de 50 tours par minute) par rapport à la vitesse de rotation des décanteurs (généralement entre 3000 et 4000 tours par minute) ce qui permet d'éviter la formation d'une émulsion.

Contrairement aux procédés décrits dans l'art antérieur, le procédé selon l'invention ne nécessite aucune autre étape de pressage que l'étape c). Ainsi, l'étape c) est avantageusement la seule étape de pressage du procédé.

L'étape c) permet notamment d'obtenir un jus de presse essentiellement débarrassé des éléments solides, en particulier essentiellement débarrassé de la chitine. Le pressage facilite considérablement la mise en œuvre des étapes ultérieures mises en œuvre à partir du jus de presse. La Demanderesse a en effet montré que l'ajout d'une étape de pressage permet d'obtenir des fractions de nutriments particulièrement pures, notamment une fraction protéique aqueuse riche en protéines et pauvre en lipides à l'étape d).

La Demanderesse a également montré que l'étape de pressage permet de mettre en œuvre une étape de séparation physique (étape d) à des températures plus basses que celles décrites dans l'art antérieur, par exemple à une température allant de 50°C à 80°C, notamment allant de 65 à 75°C. Une telle température permet de préserver la fraction liquide lors de la séparation physique, notamment la qualité de la fraction huileuse obtenue à l'étape d). Une telle température permet également de limiter l'oxydation des lipides, ce qui permet également de préserver la qualité de la fraction huileuse obtenue à l'étape d).

La teneur en chitine contenue dans la fraction solide enrichie en chitine est de préférence au moins 1,5 fois supérieure à la teneur en chitine du broyat, de préférence au moins 2 fois supérieure, par exemple au moins 2,5 fois ou 3 fois supérieure. Avantageusement, la teneur en chitine est au moins égale à 15% en masse de la masse sèche de la fraction solide enrichie en chitine, par exemple au moins égale à 20%, au moins égale à 25%, au moins égale à 30%.

La fraction solide enrichie en chitine peut être utilisée telle quelle ou transformée, par exemple pour en extraire la chitine.

La chitine trouve de nombreuses applications, notamment dans l'industrie agro-alimentaire comme additif épaississant ou stabilisant. La chitine peut également être utilisée dans l'industrie pharmaceutique ou dans l'alimentation animale.

Dans le cadre de la présente invention, la fraction liquide est transformée à l'étape d) pour obtenir notamment des fractions protéique aqueuse et huileuse, qui sont particulièrement valorisables industriellement, notamment dans l'alimentation animale.

### Etape d)

L'étape d) consiste à soumettre la fraction liquide à une séparation physique afin d'obtenir une fraction protéique aqueuse et une fraction huileuse. La séparation physique peut être réalisée par décantation, centrifugation, séparation par osmose inverse, ultrafiltration, extraction au CO₂ supercritique, ou une combinaison de plusieurs de ces méthodes de séparation.

Dans un mode de réalisation préféré, la séparation physique est réalisée avec un appareil permettant de centrifuger et de décanter de façon simultanée, par exemple avec un séparateur à assiettes ou avec un décanteur 3 phases. De tels appareils sont communément utilisés dans l'industrie agroalimentaire pour obtenir en une seule étape une fraction aqueuse (ex. une fraction protéique aqueuse) et une fraction huileuse. Ces deux fractions sont dépourvues de résidus solides.

Les décanteurs 3 phases ou « décanteur triphasé » sont utilisés pour la séparation simultanée de deux phases liquides de différentes densités et d'une phase solide. Les décanteurs 3 phases effectuent ainsi une séparation triphasée (séparation solide-liquide-liquide) des dispersions de résidus solides et de deux liquides non miscibles de densité différente (ex. fraction huileuse et fraction protéique aqueuse). Plusieurs décanteurs 3 phases sont proposés sur le marché, par exemple le décanteur 3 phases Tricanter Flottweg, le décanteur 3 phases GEA ou le décanteur 3 phases Andritz.

Les séparateurs à assiettes sont également connus sous le nom de « séparateurs clarificateurs » ou de « centrifugeuses à assiettes ». Il s'agit de centrifugeuses à grande vitesse utilisées pour la clarification des suspensions et / ou la séparation de deux liquides de densité différente (ex. fraction huileuse et fraction protéique aqueuse). Ils fonctionnent à des vitesses plus élevées que les décanteurs 3 phases. Plusieurs séparateurs à assiettes sont proposés sur le marché, par exemple le séparateur à assiettes Flottweg, le séparateur à assiettes GEA ou le séparateur à assiettes Alfa Laval.

Dans un mode de réalisation particulier, l'étape d) permet d'éliminer les résidus solides présents dans la fraction liquide. Dans ce mode de réalisation particulier, la fraction liquide est soumise à une séparation physique afin d'obtenir une fraction protéique aqueuse, une fraction huileuse, et une fraction de résidus solides (fraction communément appelée « débourbage » ou « boues de centrifugation »).

L'étape d) peut être réalisée à une température allant de 45°C à 90°C. Comme expliqué ci-dessus, l'étape d) peut être mise en œuvre à des températures plus basses que celles décrites dans l'art antérieur, par exemple à une température allant de 50 à 80°C, notamment à une température allant de 65 à 75°C.

Dans un mode de réalisation particulier, l'étape d) réalisée avec un séparateur à assiettes à une température allant de 50 à 80°C, par exemple de 65 à 75°C.

La fraction huileuse comprend principalement les lipides contenus dans les insectes. La fraction huileuse peut être filtrée et / ou clarifiée, notamment par polissage ou par décantation. Cette étape permet d'augmenter la pureté de la fraction huileuse. La fraction huileuse peut également être transformée, par exemple pour en extraire des composés particuliers comme des acides gras particuliers.

La fraction protéique aqueuse comprend principalement les protéines contenues dans les insectes qui ont été hydrolysées lors de l'étape b).

Avantageusement, la fraction protéique aqueuse susceptible d'être obtenue par la mise en œuvre du procédé selon l'invention a une teneur protéique (protéines, fragments de protéines et acides aminés libres) au moins égale à 60% en masse de la masse sèche de ladite fraction, par exemple au moins égale à 65%, 66%, 67%, 68%, 69%, 70%, 71%, 72%, 73%, 74%, par exemple au moins égale à 75% en masse de la masse sèche de ladite fraction. La fraction protéique aqueuse susceptible d'être obtenue par la mise en œuvre du procédé selon l'invention peut également avoir une teneur protéique (protéines, fragments de protéines et acides aminés libres) au moins égale à 80% en masse de la masse sèche de ladite fraction, par exemple au moins égale à 81%, 82%, 83%, 84%, 85%, ou même plus, en masse de la masse sèche de ladite fraction.

Avantageusement, la fraction protéique aqueuse susceptible d'être obtenue par la mise en œuvre du procédé selon l'invention a une teneur en lipides inférieure à 20% en masse de la masse sèche de ladite fraction, par exemple inférieure à 15%, 14%, 13%, 12%, 10%, 9%, 8%, 7%, 6%, ou encore inférieure à 5% en masse de la masse sèche de ladite fraction.

Dans des modes de réalisation particuliers :
(i) au moins 20% en masse, préférentiellement au moins 25%, par exemple au moins 30%, par exemple environ 30%, des protéines et fragments de protéines contenus dans la fraction protéique aqueuse ont un poids moléculaire inférieur à 1300 Da ;
(ii) au moins 20% en masse, préférentiellement au moins 30% en masse, encore plus préférentiellement au moins 40% en masse, par exemple au moins 50% en masse, au moins 60% en masse, par exemple environ 70% en masse, des protéines et fragments de protéines contenus dans la fraction protéique aqueuse ont un poids moléculaire supérieur à 1300 Da ;
(iii) au moins 20% en masse, par exemple au moins 30% en masse, au moins 40% en masse, au moins 50% en masse, par exemple entre 25% et 60% en masse, entre 45% et 55% en masse, des protéines et fragments de protéines contenus dans la fraction protéique aqueuse ont un poids moléculaire compris entre 1300 Da et 5700 Da ;
(iv) au moins 5% en masse, par exemple au moins 6%, au moins 7%, au moins 8%, au moins 9%, au moins 10% en masse, par exemple environ 13% en masse, des protéines et fragments de protéines contenus dans la fraction protéique aqueuse ont un poids moléculaire supérieur à 10 000 Da ;
(v) la teneur protéique (protéines, fragments de protéines et acides aminés libres) est au moins égale à 60% en masse de la masse sèche de ladite fraction, par exemple au moins égale à 65%, 66%, 67%, 68%, 69%, 70%, 71%, 72%, 73%, 74%, par exemple au moins égale à 75%, 80% 81%, 82%, 83%, 84%, 85%, ou même plus, en masse de la masse sèche de ladite fraction ; et/ou
(vi) la teneur en lipides est inférieure à 20% en masse de la masse sèche de ladite fraction, par exemple inférieure à 15%, 14%, 13%, 12%, 10%, 9%, 8%, 7%, 6%, ou encore inférieure à 5% en masse de la masse sèche de ladite fraction.

Par conséquent, la fraction protéique aqueuse susceptible d'être obtenue par la mise en œuvre du procédé selon l'invention peut se caractériser par une, deux, trois, quatre, cinq ou six caractéristiques choisies parmi (i), (ii), (iii), (iv), (v) et (vi).

Dans un mode de réalisation préféré, la fraction protéique aqueuse susceptible d'être obtenue par la mise en œuvre du procédé selon l'invention se caractérise par la caractéristique (iii) et une ou plusieurs caractéristique(s) choisie(s) parmi (i), (ii), (iv), (v) et (vi). Une teneur d'au moins 20% en protéines et fragments de protéines contenus dans la fraction protéique aqueuse ont un poids moléculaire compris entre 1300 Da et 5700 Da est avantageuse sur le plan nutritionnel et correspond souvent à ce que recherche les nutritionnistes, par exemple dans la préparation d'aliments pour animaux. En effet des poids moléculaires inférieurs à 1000 Da combinés avec une grande proportion d'acides aminés libres présentent des inconvénients avec des risques de diarrhées ou de non assimilation. Inversement, les plus haut poids moléculaires (ex. supérieurs à 7000 Daltons) sont aussi moins intéressants sur un plan de leur digestibilité et d'un point de vue nutritionnel.

Dans un mode de réalisation particulier, les protéines et fragments de protéines contenus dans la fraction protéique aqueuse ont la répartition en poids moléculaires du tableau 6.

La fraction protéique aqueuse peut également être séchée pour obtenir une poudre protéique, par exemple une poudre protéique comprenant moins de 3% en masse d'eau. Dans un mode de réalisation particulier, le séchage permet d'inactiver la protéase, en particulier lorsque le broyat hydrolysé n'est pas chauffé pour stopper la réaction d'hydrolyse avant l'étape c). Les méthodes de séchage sont bien décrites dans la littérature, on peut citer par exemple le séchage par atomisation, le séchage sous vide, la lyophilisation ou l'utilisation d'un sécheur tambour. La poudre protéique peut être utilisée telle quelle, par exemple dans l'alimentation animale ou humaine, peut être transformée, par exemple pour en extraire les acides aminés ou des protéines particulières, ou peut être incorporée dans des préparations destinées à l'alimentation animale ou humaine.

### Etapes optionnelles

Dans un mode de réalisation particulier de l'invention, la fraction liquide obtenue à l'étape c) est tamisée avant l'étape d). Le tamisage permet d'éliminer les particules solides résiduelles présentes dans la fraction liquide. Par exemple, le tamisage peut être réalisé avec un tamis dont la taille des pores est inférieure à 1 mm, de préférence inférieure à 0,5 mm. L'Homme du métier pourra décider d'ajouter une étape de tamisage s'il considère que la fraction liquide contient trop de particules solides résiduelles.

Dans un autre mode de réalisation particulier de l'invention, l'étape a) est précédée d'une étape qui consiste à blanchir les insectes, par exemple en les plongeant dans de l'eau chauffée à plus de 80°C pendant une durée suffisante. Une immersion de 5 min dans de l'eau à 90°C est généralement suffisante. Les larves sont ensuite égouttées avant la mise en œuvre de l'étape a). Cette étape de blanchiment permet notamment de nettoyer les insectes, en particulier les larves, et de neutraliser les enzymes naturellement présentes dans les insectes. Les enzymes naturellement présentes dans les insectes peuvent être à l'origine d'un noircissement qui n'est pas souhaité, notamment lors de la préparation du broyat à l'étape a).

Les étapes optionnelles mentionnées ci-dessus ne sont pas limitatives et peuvent être combinées entre elles.

### L'invention concerne également :

Une fraction protéique aqueuse susceptible d'être obtenue par la mise en œuvre du procédé selon l'invention, dans laquelle :
(i) au moins 20% en masse, préférentiellement au moins 25%, par exemple au moins 30%, par exemple environ 30%, des protéines et fragments de protéines contenus dans ladite fraction ont un poids moléculaire inférieur à 1300 Da ;
(ii) au moins 20% en masse, préférentiellement au moins 30% en masse, encore plus préférentiellement au moins 40% en masse, par exemple au moins 50% en masse, au moins 60% en masse, par exemple environ 70% en masse, des protéines et fragments de protéines contenus dans la fraction protéique aqueuse ont un poids moléculaire supérieur à 1300 Da ;
(iii) au moins 20% en masse, par exemple au moins 30% en masse, au moins 40% en masse, au moins 50% en masse, par exemple entre 25% et 60% en masse, entre 45% et 55% en masse, des protéines et fragments de protéines contenus dans la fraction protéique aqueuse ont un poids moléculaire compris entre 1300 Da et 5700 Da ;
(iv) au moins 5% en masse, par exemple au moins 6%, au moins 7%, au moins 8%, au moins 9%, au moins 10% en masse, par exemple environ 13% en masse, des protéines et fragments de protéines contenus dans la fraction protéique aqueuse ont un poids moléculaire supérieur à 10 000 Da ;
(v) la teneur protéique (protéines, fragments de protéines et acides aminés libres) est au moins égale à 60% en masse de la masse sèche de ladite fraction, par exemple au moins égale à 65%, 66%, 67%, 68%, 69%, 70%, 71%, 72%, 73%, 74%, par exemple au moins égale à 75%, 80% 81%, 82%, 83%, 84%, 85%, ou même plus, en masse de la masse sèche de ladite fraction ; et / ou
(vi) la teneur en lipides est inférieure à 20% en masse de la masse sèche de ladite fraction, par exemple inférieure à 15%, 14%, 13%, 12%, 10%, 9%, 8%, 7%, 6%, ou encore inférieure à 5% en masse de la masse sèche de ladite fraction.

Par conséquent, la fraction protéique aqueuse susceptible d'être obtenue par la mise en œuvre du procédé selon l'invention peut se caractériser par une, deux, trois, quatre, cinq ou six caractéristiques choisies parmi (i), (ii), (iii), (iv), (v) et (vi).

Dans un mode de réalisation préféré, la fraction protéique aqueuse susceptible d'être obtenue par la mise en œuvre du procédé selon l'invention se caractérise par la caractéristique (iii) et une ou plusieurs caractéristique(s) choisie(s) parmi (i), (ii), (iv), (v) et (vi). Une teneur d'au moins 20% en protéines et fragments de protéines contenus dans la fraction protéique aqueuse ont un poids moléculaire compris entre 1300 Da et 5700 Da est avantageuse sur le plan nutritionnel et correspond souvent à ce que recherche les nutritionnistes, par exemple dans la préparation d'aliments pour animaux. En effet des poids moléculaires inférieurs à 1000 Da combinés avec une grande proportion d'acides aminés libres présentent des inconvénients avec des risques de diarrhées ou de non assimilation. Inversement, les plus haut poids moléculaires (ex. supérieurs à 7000 Daltons) sont aussi moins intéressants sur un plan de leur digestibilité et d'un point de vue nutritionnel.

Dans un mode de réalisation particulier, les protéines et fragments de protéines contenus dans la fraction protéique aqueuse ont la répartition en poids moléculaires du tableau 6.

Par exemple, non limitatif, la fraction protéique aqueuse susceptible d'être obtenue par la mise en œuvre du procédé selon l'invention se caractérise par: (iii) au moins 20% en masse, par exemple au moins 30% en masse, au moins 40% en masse, au moins 50% en masse, par exemple entre 25% et 60% en masse, entre 45% et 55% en masse, des protéines et fragments de protéines contenus dans la fraction protéique aqueuse ont un poids moléculaire compris entre 1300 Da et 5700 Da ; et
(vi) la teneur en lipides est inférieure à 20% en masse de la masse sèche de ladite fraction, par exemple inférieure à 15%, 14%, 13%, 12%, 10%, 9%, 8%, 7%, 6%, ou encore inférieure à 5% en masse de la masse sèche de ladite fraction.

Une fraction huileuse susceptible d'être obtenue par la mise en œuvre du procédé selon l'invention.

Une fraction solide enrichie en chitine susceptible d'être obtenue par la mise en œuvre du procédé selon l'invention, dans laquelle la teneur en chitine est au moins égale à 15% en masse de la masse sèche de ladite fraction, par exemple au moins égale à 20%, au moins égale à 25%, au moins égale à 30%.

Les caractéristiques de ces trois fractions sont précisées aux étapes c) et d) ci-dessus.

La présente invention est maintenant illustrée par les exemples non limitatifs suivants. Dans ces exemples, et sauf indication contraire, les pourcentages sont exprimés par rapport à la masse sèche.

### Brève description des dessins

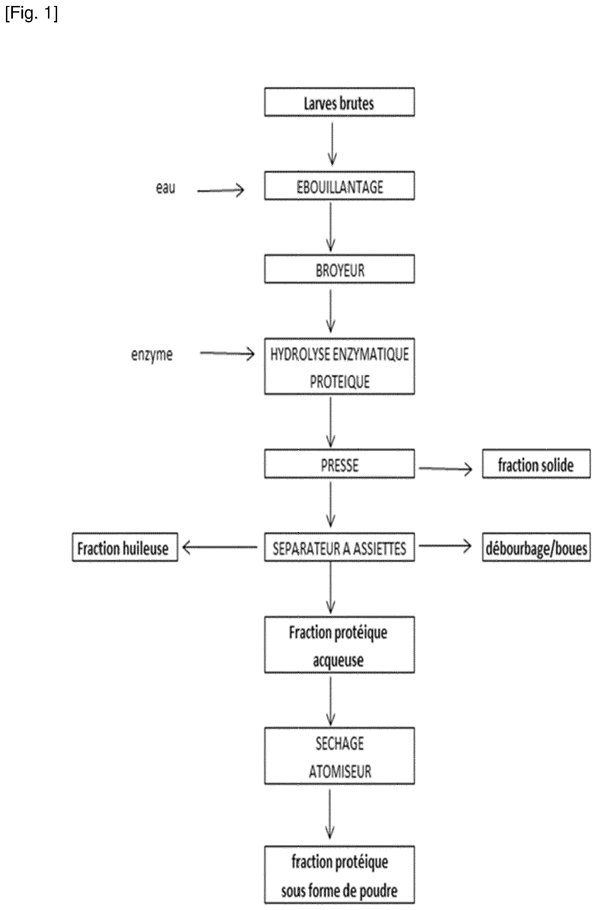

[Fig. 1] représente un logigramme des étapes d'un procédé selon l'invention. Le procédé comprend notamment des étapes d'ébouillantage des larves, de broyage, d'hydrolyse enzymatique, de pressage, de séparation par un séparateur à assiettes puis séchage de la fraction protéique aqueuse, appelée « hydrolysat déshuilé » ou « hydrolysat protéique d'insecte ». Ce logigramme correspond au Protocole 1.

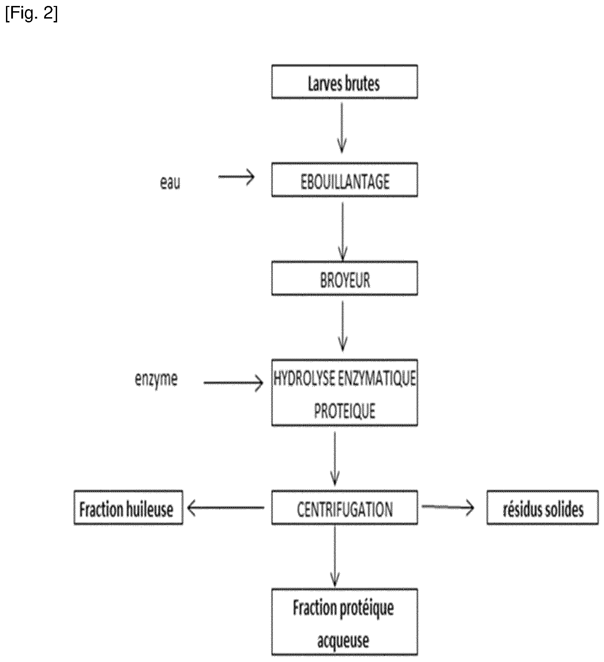

[Fig. 2] représente un logigramme des étapes d'un procédé qui n'est pas selon l'invention. Le procédé comprend notamment des étapes d'ébouillantage des larves, de broyage, d'hydrolyse enzymatique, de séparation par une centrifugeuse pour obtenir une fraction protéique aqueuse. Le procédé ne comprend pas d'étape de pressage. Ce logigramme correspond au Protocole 2.

### EXEMPLE

### Matériels et méthodes

Chaque teneur a été mesurée sur des échantillons de chacune des fractions selon les méthodes suivantes :
Méthode de mesure de la teneur protéique (protéines, fragments de protéines et acides aminés libres) : la teneur protéique a été mesurée par dosage de l'azote sur la matière brute (méthode Kjeldahl) puis multiplication de la teneur en azote par un coefficient de 6,38 afin d'obtenir la teneur protéique de la matière brute. La teneur protéique de la matière brute a été multipliée par le pourcentage de masse sèche afin d'obtenir la teneur protéique en masse de la masse sèche.

Méthode de mesure des poids moléculaire des protéines et fragments de protéines : les échantillons de fraction protéique aqueuse ont été passés au travers d'une colonne de gel-filtration dans laquelle la vitesse de migration des molécules dépend de leur poids moléculaire : les grosses molécules migrent le plus vite tandis que les plus petites sortent à la fin de l'analyse. Le détecteur UV a détecté à 214 nm les protéines en sortie. La taille des pics est proportionnelle à la quantité de protéines en sortie. Les différents hydrolysats ont pu être comparés en comparant l'aire des pics entre des temps fixes donnés. A partir de standards (protéines de référence dont le poids moléculaire est connu : l'ovalbumine, le lysozyme, la protinine, l'insuline chaine-alpha, l'angiotensin II humaine, le L-Tryptophane), une équivalence temps de rétention en fonction du poids moléculaire a été déterminée.

Méthode de mesure de la teneur en lipides : la teneur en lipides a été mesurée par dosage MGRA-H par un laboratoire accrédité COFRAC.

Méthode de mesure de la teneur en chitine : la teneur en chitine a été mesurée par dosage de la glucosamine à l'aide de la chromatographie ionique. La teneur en glucosamine est ensuite divisée par un facteur 1,062 afin d'obtenir la teneur en chitine.

Méthode de mesure de la teneur en minéraux : la teneur en minéraux a été déterminée par mesure de la masse totale des cendres brutes. Un échantillon, placé dans un creuset, est incinéré à 550°C dans un four à moufle électrique avec thermostat. Le résidu est pesé.

### Protocole 1 : Préparation de nutriments à partir d'insectes - selon l'invention

165 kg de larves de Black soldier fly (*Hermetia illucens*) vivantes ont été utilisées dans ce protocole. La teneur en masse sèche et la composition de la masse sèche d'un broyat de larves sont présentés dans le Tableau 1.

Les larves ont été disposées sur une toile puis immergées dans de l'eau à température de 90°C durant 5 minutes. La masse des larves après l'étape de blanchiment était d'environ 196 kg, ce qui correspond à une prise d'eau de 31 kg.

### Etape a)

Les larves blanchies ont été introduites dans un broyeur de la marque Urschel Comitrol 1700 et broyées de façon à obtenir un broyat de granulométrie moyenne de 0,5 mm. La température du broyat à la sortie du broyeur était d'environ 40 - 45°C.

### Etape b)

Le broyat a ensuite été introduit dans une cuve sous agitation avec 0.4kg de protéase. La température a été portée à 60 °C. Le pH était de 8. Afin de faciliter l'agitation, de l'eau a été ajoutée au mélange au cours de l'hydrolyse.

Une pompe centrifuge a également été installée sur le réacteur pour améliorer l'agitation du mélange.

Après trois heures d'agitation, la température du mélange a été portée à 80°C pour stopper la réaction enzymatique.

### Etape c)

Le broyat hydrolysé a ensuite été pressé avec une presse à vis de la Marque Olexa, de type presse en voie humide MBU 75 équipée d'un tamis de taille de pores de 2 mm. La température lors du pressage était de 85°C. L'obturateur de la presse a été réglé de façon à être fermé au trois quart.

Un gâteau de presse correspondant à la fraction solide enrichie en chitine (masse : 18 kg) et un jus de presse correspondant à la fraction liquide (masse : 223 kg) ont ainsi été obtenus.

Les analyses du gâteau de presse et du jus de presse sont présentées dans le Tableau 2. Les rendements de cette étape sont présentés dans le Tableau 4.

### Etape d)

La fraction liquide chauffée à environ 75°C a ensuite été placée dans un séparateur à assiettes de type GEA Westfalia de type SAOH, de façon à obtenir trois fractions:
- Une fraction huileuse, ayant une de densité d'environ 0,9 ;
- Une fraction protéique aqueuse, ayant une densité d'environ 1,0 ; et
- Une fraction de résidus solides de densité 1,1.

La fraction protéique aqueuse ne présentait pas d'anneau de matière grasse après centrifugation d'un échantillon, ce qui prouve que l'étape de séparation a été réalisée avec succès. Par ailleurs, il convient de noter qu'aucune émulsion n'a été observée avec le Protocole 1.

Les analyses des trois fractions sont présentées dans le Tableau 3. Les rendements de cette étape sont présentés dans le Tableau 4.

### Autres étapes

La fraction protéique aqueuse enrichie en protéines a ensuite été séchée par un atomiseur à pulvérisation horizontale. La fraction protéique aqueuse a été pulvérisée sous forme de microsphères par des buses dans une turbine qui permet de générer un flux d'air chaud conique convergent de très haute densité et de faibles dimensions. La température de l'air chaud à l'entrée était de 200 - 210°C et en sortie de 90 - 96°C.

Une poudre protéique a ainsi été obtenue à partir de la fraction protéique aqueuse. La poudre contenait 76,8% en masse de protéines.

### Protocole 2 : Préparation de nutriments à partir d'insectes - hors invention

0,507kg de larves de Black soldier fly (*Hermetia illucens*) vivantes ont été utilisées dans ce protocole.

La teneur en masse sèche et la composition de la masse sèche d'un broyat de larves sont présentés dans le Tableau 1.

Les larves ont été ébouillantées par immersion dans de l'eau bouillante dans un réacteur de laboratoire pendant 5 minutes avec une très faible agitation puis disposées sur un tamis pour égouttage. La masse des larves après l'étape de blanchiment était d'environ 0,566 kg ce qui correspond à une prise d'eau de 59 g.

### Etape a)

194 g d'eau ont été ajoutés aux larves blanchies qui ont ensuite été broyées dans un broyeur de laboratoire muni d'un couteau pendant 1 minute.

### Etape b)

1,52g de la même protéase qu'utilisée au protocole 1 a été ajouté au broyat. La température a été portée à 55 °C. Le pH était de 7,2. Après quatre heures, la température du mélange a été portée à 90°C pendant 5 minutes pour stopper la réaction enzymatique.

Le broyat hydrolysé chauffé à 90°C a ensuite été placé dans un pot et centrifugé pendant 8 minutes à 3000 G de façon à obtenir quatre fractions :
- Une fraction huileuse, ayant une densité d'environ 0,9 (45g) ;
- Une émulsion, ayant une densité d'environ 0,95 (58g) ;
- Une fraction protéique aqueuse, ayant une densité d'environ 1,0 (425g); et
- Une fraction de résidus solides (223g).

Il convient de noter qu'une émulsion a été observée avec le Protocole 2. Cette émulsion a été séparée de la fraction huileuse et de la fraction protéique aqueuse pour les analyses. Les analyses des trois fractions (huileuse, protéique aqueuse et résidus solides) sont présentées dans le Tableau 3. Les rendements de cette étape sont présentés dans le Tableau 5.

La fraction protéique aqueuse comprenait 62,3 % en masse de protéines.

### Analyse des fractions obtenues par la mise en œuvre des Protocoles 1 et 2

Le tableau 1 ci-dessous correspond à l'analyse du broyat: pourcentage de masse sèche et teneur de certains constituants en masse de la masse sèche.

**[Table 1]**

| | Pourcentage de masse sèche | Minéraux | Chitine (1) | Protéines (2) | Lipides (3) | Autres (4) |
|---|---|---|---|---|---|---|
| Protocole 1 | 33,7 % | 6,1 % | 8,5 % | 35,1 % | 48,3 % | 2% |
| Protocole 2 | 36,0 % | 5,3 % | - | 45,9 % | 48,8 % | - |

(1) La teneur en chitine n'a pas été mesurée dans le protocole 2.
(2) La teneur protéique des larves du protocole 1 est évaluée à partir de la teneur en azote total sur sec (6,1%) à laquelle est soustrait l'azote contenu dans la chitine (0,6% car la chitine contient 6,89% d'azote) soit 5,5% d'azote protéique (multipliés par 6,38) soit 35,1% de protéines sur sec. Etant donné que la teneur en chitine n'a pas été mesurée dans le protocole 2, la teneur protéique n'a pas été corrigée. Elle est donc surestimée d'environ 10%.
(3) La teneur en lipides a directement été mesurée dans le protocole 1. Dans le protocole 2, la teneur en lipides a été calculée en faisant la différence avec la teneur en minéraux et la teneur protéique (100% - (% minéraux + % protéines)). La teneur en lipides est probablement légèrement surestimée dans le protocole 2 (chitine non dosée).
(4) La colonne « autres » correspond à la différence entre la matière sèche et la somme des minéraux, chitine, protéines et matières grasses dans le protocole 1.

Le tableau 2 ci-dessous correspond à l'analyse de la fraction liquide et fraction solide riche en chitine après pressage : pourcentage de masse sèche et teneur de certains constituants en masse de la masse sèche.

**[Table 2]**

| | Pourcentage de matière sèche | Minéraux | Chitine | Protéines | Lipides | Autres (par différence) |
|---|---|---|---|---|---|---|
| Fraction liquide | 22,6 % | 4,3 % | Non mesuré | 35,3 % | 57,6 % | 2,8 % |
| Fraction solide enrichie en chitine | 46,3 % | 7,8 % | 27,5 % | 38,3 % | 14,9 % | 11,5 % |

Le tableau 3 correspond à l'analyse des fractions protéiques aqueuse, huileuse et de résidus solides : pourcentage de masse sèche et teneur de certains constituants en masse de la masse sèche.

**[Table 3]**

| | | Masse sèche | Minéraux | Chitine (1) | Protéines (2) | Lipides (3) | Autres (par différence) |
|---|---|---|---|---|---|---|---|
| Fractions obtenues selon le Protocole 1 | Fraction protéique aqueuse | 10,5% | 8,3% | 0,4% | **76,8%** | **<4,8%** | 9,7-14,5% |
| | Fraction huileuse | 64,7% | 0,5% | Non mesurée | 1,1% | 77,3% | 21,0% |
| | Fraction de résidus solides | 22,9% | 4,3% | 0,3% | 29,3% | 60,7% | 6,6% |
| Fractions obtenues selon le Protocole 2 | Fraction protéique aqueuse | 10,5% | 7,4% | Non mesuré | **62,3%** | **30,4%** | - |
| | Fraction huileuse | 98,0% | 1,7% | Non mesuré | 0,7% | 97,6% | - |
| | Fraction de résidus solides | 27,9% | 4,7% | Non mesuré | 47,0% | 49,0% | - |

(1)La teneur en chitine n'a pas été mesurée dans le protocole 2.
(2)Les teneurs en protéines dans le protocole 2 sont surestimées puisque l'azote de la chitine n'a pas été soustrait.
(3)Pour le protocole 2, les teneurs en lipides sont calculées en faisant la différence avec la teneur en minéraux et la teneur protéique (100% - (% minéraux + % protéines)).

**Conclusion** : La fraction protéique aqueuse obtenue avec le Protocole 1 a une teneur protéique supérieure à celle obtenue avec le Protocole 2 (76,8% vs 62,3%). De plus, la fraction protéique aqueuse obtenue avec le Protocole 1 a une teneur en lipides très inférieure à celle obtenue avec le Protocole 2 (4,8% vs 30,4%). Ces résultats montrent que l'étape de pressage a permis d'augmenter significativement la pureté de la fraction protéine aqueuse et d'éviter une émulsion lors de la séparation physique.

### Rendements des Protocoles 1 et 2

Le rendement du protocole 1 correspond au tableau 4.

**[Table 4]**

| | Masse (kg) | Masse sèche (kg) | Protéine s (kg) | Lipides (kg) | Minéraux (kg) | Chitine (kg) | Autres (kg) |
|---|---|---|---|---|---|---|---|
| Matière première (larves) | 165 | 55,6 | 19,5 | 26,9 | 3,4 | 4,7 | 1,1 |
| | | | | | | | |
| Gâteau de presse (Fraction solide enrichie en chitine) | 18 | 8,4 | 3,2 | 1,2 | 0,7 | 2,3 | 1,0 |
| Jus de presse (Fraction liquide) | 223 | 50,3 | 17,8 | 29,0 | 2,2 | Non mesuré | 1,4 |
| Total | 241,0 | 58,7 | 21,0 | 30,2 | 2,8 | 2,3 | 2,4 |
| | | | | | | | |
| Fraction protéique aqueuse | 143 | 15,0 | 11,5 | <0,7 | 1,2 | Non mesuré | 1,5 |
| Fraction huileuse | 14,0 | 9,1 | 0,4 | 7,0 | 0,0 | Non mesuré | 1,9 |
| Fraction de résidus solides | 64,5 | 14,8 | 4,3 | 9,0 | 0,6 | Non mesuré | 0,8 |
| Total | 221,5 | 38,8 | 16,3 | 16,7 | 1,9 | Non mesuré | 4,2 |

Le rendement du protocole 2 correspond au tableau 5.

**[Table 5]**

| | Masse (g) | Masse sèche (g) | Protéines kg) | Lipides (g) | Minéraux (g) | Chitine (g) |
|---|---|---|---|---|---|---|
| Matière première (larves) | 507 | 182,7 | 83,8 | 90,7 | 9,8 | Non mesuré |
| | | | | | | |
| Fraction de résidus solides | 223 | 62,3 | 29,2 | 30,5 | 2,9 | Non mesuré |
| obtenue après centrifugation | | | | | | |
| Fraction protéique aqueuse obtenue après centrifugation | 425 | 44,8 | 31,3 | 13,6 | 4,9 | Non mesuré |
| Fraction huileuse obtenue après centrifugation | 45 | 44,1 | 0,3 | 43,1 | 0,8 | Non mesuré |
| Emulsion obtenue après centrifugation | 58 | Non mesuré | Non mesuré | Non mesuré | Non mesuré | Non mesuré |
| Total | 751 | 151,2 | 60,8 | 87,2 | 8,6 | Non mesuré |

Le rendement du protocole 2 correspond au tableau 5.

### Analyse du poids moléculaires (Da) des protéines et fragments de protéines de la fraction protéique aqueuse obtenue selon le Protocole 1

Le tableau 6 ci-dessous correspond à l'analyse des poids moléculaires des protéines et fragments de protéines de la fraction protéique aqueuse obtenue selon le Protocole 1.

**[Table 6]**

| Poids moléculaires (MW) en Da | Pourcentage (%) |
|---|---|
| MW > 14000 | 10,97% |
| 14000< MW > 10000 | 2,38% |
| 10 000< MW > 6500 | 4,86% |
| 6500 < MW > 5700 | 2,39% |
| 5700 < MW > 2500 | 24,92% |
| 2500 < MW > 1300 | 24,94% |
| 1300 < MW > 900 | 8,54% |
| 900 < MW > 600 | 9,27% |
| 600 < MW > 360 | 2,77% |
| 360 < MW > 200 | 2,48% |
| 200 < MW > 130 | 5,11% |
| MW < 130 | 1,37% |

**Conclusion** : la fraction protéique aqueuse obtenue selon le Protocole 1 contient 29,54% de protéines et fragments de protéines ayant un poids moléculaire inférieure à 1300 Da par rapport à la quantité totale de protéines et fragments de protéines de la fraction protéique aqueuse. Elle contient également environ 50% de protéines et fragments de protéines ayant un poids moléculaire compris entre 1300 Da et 5700 Da, ce qui est particulièrement intéressant d'un point de vue nutritionnel.

## Revendications

1. Procédé de préparation de nutriments à partir d'insectes comprenant les étapes suivantes :
a) broyer des insectes afin d'obtenir un broyat,
b) soumettre le broyat à une hydrolyse enzymatique afin d'obtenir un broyat hydrolysé,
c) presser le broyat hydrolysé afin d'obtenir une fraction solide enrichie en chitine et une fraction liquide, et
d) soumettre la fraction liquide à une séparation physique afin d'obtenir une fraction protéique aqueuse et une fraction huileuse.

2. Procédé de préparation selon la revendication 1, dans lequel les insectes sont choisis parmi *Tenebrio molitor, Hermetia illucens, Galleria mellonella, Alphitobius diaperinus, Zophobas morio, Blattera fusca, Tribolium castaneum, Rhynchophorus ferrugineus, Musca domestica, Chrysomya megacephala, Locusta migratoria, Schistocerca gregaria, Acheta domesticus, Gryllodes sigillatus, Gryllus assimillis* et *Samia ricini,* de préférence *Hermetia illucens.*

3. Procédé de préparation selon l'une quelconque des revendications précédentes, comprenant en outre une étape préalable à l'étape a), qui consiste à blanchir les insectes.

4. Procédé de préparation selon l'une quelconque des revendications précédentes, dans lequel l'étape a) permet d'obtenir un broyat de granulométrie inférieure à 2,0 mm.

5. Procédé de préparation selon l'une quelconque des revendications précédentes, dans lequel l'hydrolyse enzymatique de l'étape b) est réalisée avec une ou plusieurs protéase(s).

6. Procédé de préparation selon l'une quelconque des revendications précédentes, dans lequel l'étape c) est réalisée avec une presse à vis.

7. Procédé de préparation selon l'une quelconque des revendications précédentes, dans lequel l'étape d) est réalisée avec un séparateur à assiettes.

8. Procédé de préparation selon la revendication 7, dans lequel l'étape d) est réalisée à une température allant de 50 à 80°C, par exemple de 65 à 75°C.

9. Procédé de préparation selon l'une quelconque des revendications précédentes, dans lequel la fraction protéique aqueuse est séchée pour obtenir une poudre protéique.

10. Procédé de préparation selon l'une quelconque des revendications précédentes, dans lequel la fraction huileuse est filtrée et / ou clarifiée, de préférence par polissage ou par décantation.

11. Fraction protéique aqueuse susceptible d'être obtenue par la mise en œuvre du procédé selon l'une quelconque des revendications 1 à 10, dans laquelle au moins 20% en masse des protéines et fragments de protéines contenus dans ladite fraction ont un poids moléculaire compris entre 1300 Da et 5700 Da.

12. Fraction protéique aqueuse selon la revendication 11, dans laquelle la teneur protéique (protéines, fragments de protéines et acides aminés libres) est au moins égale à 60% en masse de la masse sèche de ladite fraction.

13. Fraction protéique aqueuse selon l'une quelconque des revendications 11 ou 12, dans laquelle la teneur en lipides est inférieure à 20% en masse de la masse sèche de ladite fraction.

14. Fraction huileuse susceptible d'être obtenue par la mise en œuvre du procédé selon l'une quelconque des revendications 1 à 10.

15. Fraction solide enrichie en chitine susceptible d'être obtenue par la mise en œuvre du procédé selon l'une quelconque des revendications 1 à 10, dans laquelle la teneur en chitine est au moins égale à 15% en masse de la masse sèche de ladite fraction.
